(19) Europäisches Patentamt
European Patent Office
Office européen des brevets

(11) Veröffentlichungsnummer : **0 468 948 A2**

(12) # EUROPÄISCHE PATENTANMELDUNG

(21) Anmeldenummer : **91890131.5**

(51) Int. Cl.$^5$ : **G01N 27/30**

(22) Anmeldetag : **25.06.91**

(30) Priorität : **26.07.90 AT 1574/90**

(43) Veröffentlichungstag der Anmeldung :
**29.01.92 Patentblatt 92/05**

(84) Benannte Vertragsstaaten :
**AT CH DE FR GB LI**

(71) Anmelder : **AVL Gesellschaft für Verbrennungskraftmaschinen und Messtechnik mbH.Prof.Dr.Dr.h.c. Hans List**
**Kleiststrasse 48**
**A-8020 Graz (AT)**

(72) Erfinder : **Saracoglu, Ibrahim Adnan, Prof. Dr.**
**Am Dominikanergrund 38**
**A-8043 Graz (AT)**
Erfinder : **Eder, Ottilie**
**Babenbergerstrasse 48**
**A-8020 Graz (AT)**
Erfinder : **Krempl, Peter W., Dr.**
**Kainbach 211**
**A-8047 Graz/Ragnitz (AT)**
Erfinder : **Schmidt, Wolfgang**
**Dorfstrasse 74**
**A-8401 Kalsdorf (AT)**

(74) Vertreter : **Krause, Walter, Dr. Dipl.-Ing. et al**
**Postfach 200**
**A-1014 Wien (AT)**

(54) **Anode einer elektrochemischen Sensoranordnung und Verfahren zur deren Herstellung.**

(57) Zur Verbesserung der Standzeit einer Anode in einer elektrochemischen Sensoranordnung, vorzugsweise zur Messung von Sauerstoff, wird vorgeschlagen, daß die Anode (7) zumindest eine dünne, porenfreie Schicht (8) eines Edelmetalls, einer Edelmetall-Legierung oder einer Legierung mit Edelmetalleigenschaften aufweist, mit welcher ein Trägermaterial beschichtet ist, sowie daß der mittlere Abstand der Atome der dünnen Schicht (8) 0,1 bis 7%, vorzugsweise 0,1 bis 3%, größer ist als der mittlere Abstand der gleichen Atome im aus der Schmelze gewonnemen polykristallinen Schichtmaterial.

EP 0 468 948 A2

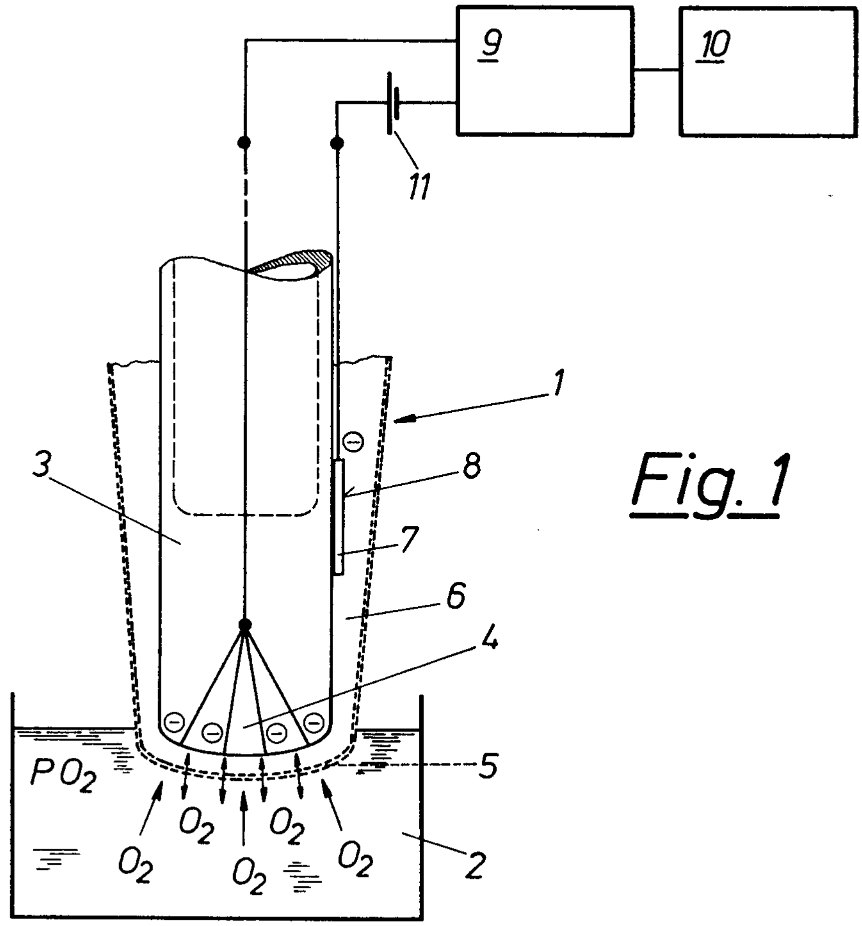


Fig. 1

Die Erfindung betriff eine Anode einer elektrochemischen Sensoranordnung, insbesondere zur Messung von Sauerstoff, welche mit einer Elektrolytlösung im Kontakt steht, sowie ein Verfahren zu deren Herstellung.

Wird eine ionensensitive Elektrode einer elektrochemischen Sensoranordnung mit Hilfe einer geeigneten Referenzelektrode bzw. Bezugselektrode zu einer Meßkette zusammengeschaltet und in eine Lösung getaucht, die das betreffende Meßion oder Gas enthält, so entsteht zwischen der Referenzelektrode und der ionensensitiven Elektrode eine Potentialdifferenz. Diese Potentialdifferenz ist ein Maß für die Konzentration der Ionen bzw. Gase. So gilt für die mit einem Voltmeter gemessene elektromotorische Kraft (EMK) die Nernstsche Gleichung in linearer Form:

$$E = E_o + \delta . \log a$$

E .... gemessene elektrische Spannung
$E_o$ .... EMK der Meßkette in einer Standardlösung
$\delta$ .... Steigung
a .... Aktivität des Meßions

Die Partialdruckmessung des Sauerstoffes beruht auf einem elektrochemischen Vorgang. Die in einer wäßrigen Lösung gelösten Sauerstoffmoleküle werden an einer Edelmetallelektrode (Kathode), die gegenüber der Referenzelektrode (Anode) auf einem Konstanten Potential von -700 mV Polarisationsspannung gehalten wird, elektrochemisch reduziert. Die von der Kathode gelieferten und von der Anode aufgenommenen Elektronen bedeuten einen elektrischen Strom in der Elektrolytlösung, welche durch eine sauerstoffdurchlässige Membran von der Probe getrennt ist. Der äußere Teil des Stromkreises wird über die Eingänge des Meßsignalverstärkers geschlossen.

Durch die vom Sauerstoffpartialdruck in der Probe abhängige Sauerstoffdiffusion durch die Membran werden die durch die Kathodenreaktion verbrauchten Sauerstoffmoleküle in der Elektrolytlösung ständig ersetzt. Es fließt daher ein Konstanter Strom, welcher ein Maß für den Sauerstoffpartialdruck, ($pO_2$) in der Probe ist.

Von der gesamten Sensoranordnung werden nun die Anode bzw. die Anodenoberfläche einer herkömmlichen Edelmetallanode und die Elektrolytlösung, sowie deren Wechselwirkung näher betrachtet.

Im Elektrolyt gelöster molekularer Sauerstoff wird an der Phasengrenze zwischen Anode und Elektrolyt durch Homolyse in der Form

$$O_2 \rightarrow O + O$$

gespalten, sodaß atomarer Sauerstoff entsteht. Ein Teil dieses atomaren Sauerstoffes bildet wieder molekularen Sauerstoff und kehrt in die Elektrolytlösung zurück. Für den anderen Teil des atomaren Sauerstoffes gilt folgendes:

Unter anderem durch die angelegte Polarisationsspannung diffundiert atomarer Sauerstoff in Richtung Festkörper (Bulk) der Anode, sodaß sich mit der Zeit in mehreren Schitchten eine passive Oxid-Schicht bildet, d.h. eine Isolationsschicht mit dielektrischen Eigenschaften, was eine Redox-Sperre an der Anode bewirkt.

An der Oberfläche einer Edelmetallanode herrscht eine beidendige Adsorption des $O_2$-Moleküls an zwei Oberflächenplätzen (M-Atome) vor, wie unten, links dargestellt:

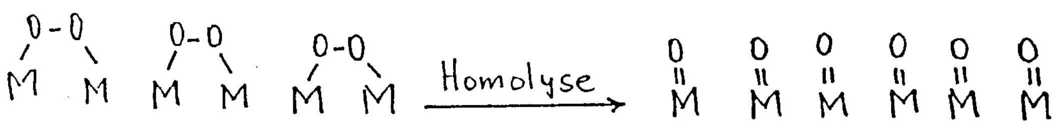


Die einfache O-O-Bindung eines $O_2$-Moleküls ist durch die Brükkenbindung an die Edelmetallatome M relativ geschwächt, infolgedessen findet eine homolytische Reaktion statt, d.h., eine symmetrische Spaltung der O-O-Bindung.

Nach der Spaltung der O-O-Bindung werden die Brückenbindungen zu den M-Atomen verstärkt bzw. neue zusätzliche Bindungen gebildet, sodaß eine stabile Oxid-Schicht entsteht. Diese Oxid-Schicht entspricht der beschriebenen Redox-Sperre.

Weiters ruft in der passiven Isolationsschicht gebundener Sauerstoff in der Elektrolytlösung einen Mangel an molekularem Sauerstoff hervor. Dieser Mangel an molekularem Sauerstoff wirkt auf das druckabhängige Potential:

$$\mu_o = \mu(p,T) + z_i\, q N_A\, \Phi$$

$$\mu = \left(\frac{\partial G}{\partial n}\right)_{p,T} + z_i\, q N_A\, \Phi$$

$$\left(\frac{\partial \mu_o}{\partial p}\right)_T = \frac{\partial}{\partial p}\left(\frac{\partial G}{\partial n}\right)_{p,T} + \frac{\partial}{\partial p}\left(z_i\, q N_A\, \Phi\right)_T$$

$\mu_o$ ... elektrochemisches Potential
$\mu$ ... chemisches Potential
$N_A$ ... Avogadro-Zahl
$Z_i$ ... Ladungszahl
q ... elementare Ladung
p ... Druck
G ... freie Enthalpie
$\Phi$ ... Potentialdifferenz
n ... mol
T ... Temperatur K

Da das elektrochemische Potential direkt vom chemischen Potential abhängig ist, wird die elektrochemische Redox-Reaktion negativ beeinflußt (Verschiebung des Gleichgewichtes an der Festkörper/Elektrolyt-Phasengrenze) und verliert dadurch ihre Aktivität mit der Zeit. Die Anode altert frühzeitig und muß ausgetauscht bzw. meist die gesamte Sensoranordnung in kurzen Zeitabständen erneuert werden.

Aufgabe der Erfindung ist es, die Standzeit einer Anode einer elektrochemischen Sensoranordnung der eingangs genannten Art zu verlängern und die Ausbildung einer Redox-Sperre zu vermeiden.

Diese Aufgabe wird erfindungsgemäß dadurch gelöst, daß die Anode zumindest eine dünne, porenfreie Schicht eines Edelmetalls, einer Edelmetall-Legierung oder einer Legierung mit Edelmetalleigenschaften aufweist, mit welcher ein Trägermaterial beschichtet ist, sowie daß der mittlere Abstant der Atome der dünnen Schicht 0,1 bis 7%, vorzugsweise 0,1 bis 3%, größer ist als der mittlere Abstand der gleichen Atome im aus der Schmelze gewonnemen polykristallinen Schichtmaterial.

Bei der erfindungsgemäßen dünnen, porenfreien Schicht mit einer Vergrößerung des mittleren atomaren Abstandes (M-M) der Edelmetallatome kommt es entweder zur beidendigen (1) oder einendigen (2) Adsorption des $O_2$-Moleküls an einem Oberflächenplatz (siehe unten, jeweils linke Seite):

(1)

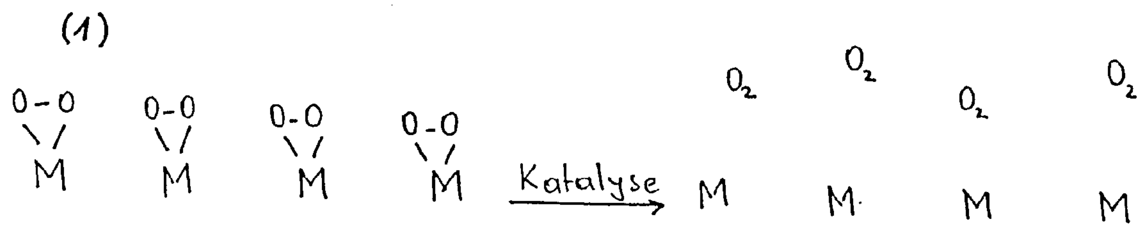


(2)

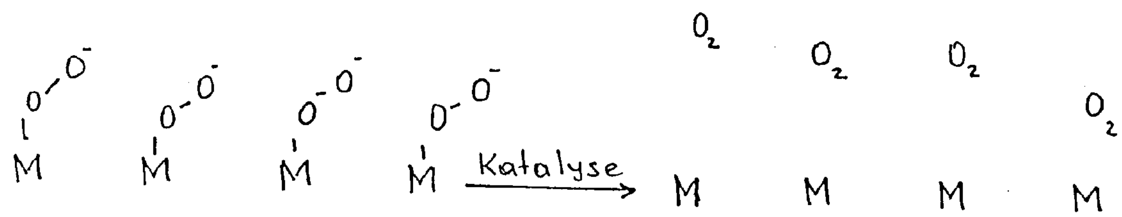

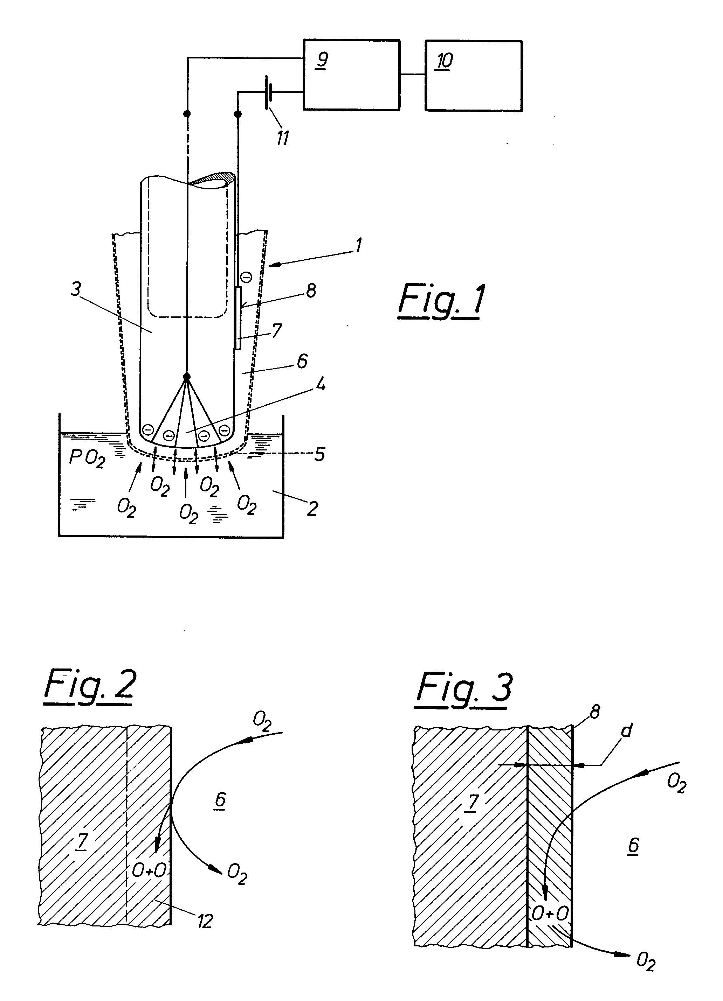

In diesem Fall bewirkt die katalytische Aktivität der dünnen Schicht die Bildung molekularen Sauerstoffes und eine Rückführung des $O_2$-Moleküls in den Elektrolyten, d.h., der Aufbau einer Redox-Sperre wird verhindert (siehe auch Fig. 3 und Fig. 4).

Erfindungsgemäß kann die dünne Schicht aus einem Metall aus der Gruppe der Platinmetalle, aus Gold, aus Silber oder einer Legierung dieser Metalle bestehen, sowie Legierungsanteile zumindest eines Metalls aus der Gruppe Kupfer, Blei, Antimon oder Germanium enthalten.

Erfindungsgemäß genügt es, wenn die dünne Schicht eine Dicke $d \geq 20$ nm aufweist. Besonders vorteilhaft sind beispielsweise Schichtdicken zwischen 100 und 1000 nm.

Erfindungsgemäß kann das Trägermaterial der dünnen Schicht sowohl ein elektrischer Isolator (z.B. Glas oder Keramik) sein oder aus einem Edelmetall bzw. einer Edelmetall-Legierung bestehen.

Im Falle eines Isolators als Trägermaterial ist weiters vorgesehen, daß die dünne Schicht mit zumindest einem Ableitdraht kontaktiert ist, welcher mit einem Halteelement vorzugsweise einem Teflonring, an die dünne Schicht angepreßt ist.

Ein erfindungsgemäßes Verfahren zur Herstellung einer Anode einer elektrochemischen Sensoranordnung, insbesondere zur Messung von Sauerstoff, ist dadurch gegeben, daß die Anode aus einem Edelmetall oder einer Edelmetall-Legierung, beispielsweise durch Sputterätzen, tiefengereinigt wird und anschließend mit einer dünnen, porenfreien Schicht eines Edelmetalls, einer Edelmetall-Legierung oder einer Legierung mit Edelmetalleigenschaften beschichtet wird, wobei die dünne Schicht durch eines der folgenden Verfahren hergestellt werden kann:

- physikalische Dampfabscheidung (PVD)
- chemische Dampfabscheidung (CVD)
- plasmaaktivierte chemische Dampfabscheidung (PACVD)
- Ionen-Platieren (IP)
- Kathoden- oder Magnetron-Kathoden-Zerstäubung.

Anhand der Beschichtung einer Silberanode mit einer Goldschicht mittels Magnetron-Kathoden-Zerstäubung seien beispielhaft Verfahrensparameter angegeben:

Erster Schritt: Sputterätzen

| | |
|---|---|
| Leistung: | 100 - 1000 Watt |
| Bias-Spannung: | 200 - 1500 Volt |
| Inertgas: | Ar 50 $cm^3$/min (bei Standardbed.) |

Zweiter Schritt: Sputter-Parameter

| | |
|---|---|
| Substrat: | Silber |
| Schichtdicke: | min 80 nm |
| Leistung: | min 100 Watt, max. 2500 Watt |
| Target: | Gold |

Der mittlere Abstand der Atome der Sputterschicht hängt vom Partialdruck des Inertgases ab, wobei dessen Durchfluß so eingestellt wird, daß der mittlere Atomabstand gegenüber dem Atomabstand eines aus der Schmelze hergestellten gleichen Materials um 0,1 bis 7 %, vorzugsweise 0,1 bis 3%, vergrößert wird.

Die Edelgasathmosphäre kann außer Argon mit einem Partialdruck $\geq 1 . 10^{-6}$ mbar noch eines oder mehrere der Gase Helium, Neon, Krypton oder Xenon enthalten. Die dünnen Schichten zeigen amorphe, amorphkristalline, polykristalline oder kristalline Struktureigenschaften, welche von der Verfahrensart und von den gewählten Verfahrensparametern abhängen.

Bei der Herstellung der dünnen Anodenschicht auf einem Isolator, kann diese durch die umseitig beschriebenen Verfahren direkt auf den Isolator aufgebracht und anschließend mit einem Ableitdraht kontaktiert werden.

Die Erfindung wird im folgenden anhand von Zeichnungen näher erläutert. Es zeigen in schematischer Darstellung:

Fig. 1 die erfindungsgemäße Anode einer elektrochemischen Sensoranordnung,

Fig. 2 Details einer Ausführungsvariante nach Fig. 1, sowie die

Fig. 3 und 4 Details einer unbeschichteten und einer beschichteten Anode.

Die in Fig. 1 dargestellte elektrochemische Sensoranordnung 1 zur Messung des Sauerstoffpartialdruckes einer Probe 2, weist einen Spezialglaskörper 3 auf, welcher mehrere, beispielsweise als feine Platindrähte ausgeführte Kathoden 4 aufnimmt. Über eine sauerstoffdurchlässige Membran 5 steht der Glaskörper 3 mit den Kathoden 4 unter Zwischenlage einer Elektrolytlösung 6 mit der Probe 2 in Kontakt. In der Elektrolytlösung ist weiters eine Anode 7 aus einem Edelmetall oder einer EdelmetallLegierung als Trägermaterial angeordnet, deren mit der Elektrolytlösung 6 in Kontakt stehende Oberfläche mit einer dünnen, porenfreien Schicht 8 eines Edelmetalls, einer Edelmetall-Legierung oder einer Legierung mit Edelmetalleigenschaften beschichtet ist. In Abhängigkeit von der geometrischen Form der Anode kann es auch von Vorteil sein, die gesamte Anodenoberfläche zu beschichten. Die Dicke d der Schicht 8 beträgt zumindest 20 nm. Der äußere Teil des Meßkreises wird durch die Eingänge eines Meßsignalverstärkers 9 geschlossen, welcher mit einer $pO_2$-Anzeige 10 in Verbindung steht. Die Polarisationsspannung wird von einer Spannungsquelle 11 zur Verfügung gestellt.

Fig. 2 zeigt eine Ausführungsvariante, bei welcher die dünne, porenfreie Schicht 8 direkt auf einen Isolator, beispielsweise auf den Spezialglaskörper 3 der Sensoranordnung aufgebracht ist. Der Glaskörper 3 umschließt die aus einem feinen Platindraht bestehende Kathode 4. Die dünne Schicht 8 wird durch zwei Ableitdrähte 13 (z.B. aus Silber), kontaktiert, welche mittels eines ringförmigen Halteelementes 14 auf die Schicht 8 bzw. an den Glaskörper 3 angepreßt werden. Es sind natürlich auch alle anderen bekannten Kontaktierungsmöglichkeiten dünner Schichten zulässig.

In den Fig. 3 und 4 wird der Weg des im Elektrolyten 6 vorliegenden, gelösten molekularen Sauerstoffes $O_2$ für unbeschichtet (Fig. 3) und beschichtete (Fig. 4) Anoden verglichen.

Im unbeschichteten Fall (Fig. 3) entsteht durch Homolyse an der Phasengrenze fest/flüssig atomarer Sauerstoff O+O, welcher sich im Festkörper 7′ (Bulk) der Anode 7 einlagert und eine passive Schicht 12 bildet. Das bewirkt eine Redox-Sperre in der Anode. An der Grenzfläche gilt:

$$\left(\frac{\partial \mu_o}{\partial p}\right)_T \neq 0$$

Die dünne Edelmetallschicht der Anode 7 (Fig. 4) wirkt katalytisch auf den atomaren Sauerstoff in der Schicht 8, welcher wieder in molekularen Sauerstoff umgewandelt wird und in die Elektrolytlösung 6 zurückkehrt. Hier gilt an der Grenzfläche:

$$\left(\frac{\partial \mu_o}{\partial p}\right)_T = 0$$

Eine Isolationsschicht kann dadurch nicht entstehen. Die Standzeit der Elektrode wird dadurch wesentlich (10-fach bis 100-fach) erhöht.

## Patentansprüche

1. Anode einer elektrochemischen Sensoranordnung, insbesondere zur Messung von Sauerstoff, welche mit einer Elektrolytlösung im Kontakt steht, dadurch gekennzeichnet, daß die Anode (7) zumindest eine dünne, porenfreie Schicht (8) eines Edelmetalls, einer Edelmetall-Legierung oder einer Legierung mit Edelmetalleigenschaften aufweist, mit welcher ein Trägermaterial beschichtet ist, sowie daß der mittlere Abstand der Atome der dünnen Schicht (8) 0,1 bis 7%, vorzugsweise 0,1 bis 3%, größer ist als der mittlere Abstand der gleichen Atome im aus der Schmelze gewonnenen polykristallinen Schichtmaterial.

2. Anode nach Anspruch 1, dadurch gekennzeichnet, daß die dünne Schicht (8) aus einem Metall aus der Gruppe der Platinmetalle, aus Gold, aus Silber oder einer Legierung dieser Metalle besteht.

3. Anode nach Anspruch 2, dadurch gekennzeichnet, daß die dünne Schicht (8) Legierungsanteile zumindest eines Metalls aus der Gruppe Kupfer, Blei, Antimon oder Germanium enthält.

4. Anode nach einem der Ansprüche 1 bis 3, dadurch gekennzeichnet, daß die dünne Schicht (8) eine Dicke $d \geq 20$ nm aufweist.

5. Anode nach einem der Ansprüche 1 bis 4, dadurch gekennzeichnet, daß das Trägermaterial der dünnen Schicht (8) ein elektrischer Isolator (3) ist und vorzugsweise aus Glas oder Keramik besteht.

6. Anode nach Anspruch 5, dadurch gekennzeichnet, daß die dünne Schicht (8) mit zumindest einem Ableitdraht 13 kontaktiert ist, welcher mit einem Halteelement (14) vorzugsweise einem Teflonring, an die dünne Schicht (8) angepreßt ist.

**7.** Anode nach einem der Ansprüche 1 bis 4, dadurch gekennzeichnet, daß das Trägermaterial der dünnen Schicht (8) aus einem Edelmetall oder einer EdelmetallLegierung besteht.

**8.** Verfahren zur Herstellung einer Anode einer elektrochemischen Sensoranordnung, insbesondere zur Messung von Sauerstoff, dadurch gekennzeichnet, daß auf einen elektrischen Isolator eine dünne, porenfreie Schicht eines Edelmetalls, einer Edelmetall-Legierung oder einer Legierung mit Edelmetalleigenschaften durch chemische oder physikalische Dampfabscheidung (CVD, PVD), durch plasmaaktivierte chemische Dampfabscheidung (PACVD), durch Ionen-Platieren (IP), durch Kathoden- oder Magnetron-Kathoden-Zerstäubung aufgebracht wird, sowie daß die dünne Schicht mit einem Ableitdraht kontaktiert wird.

**9.** Verfahren zur Herstellung einer Anode einer elektrochemischen Sensoranordnung, insbesondere zur Messung von Sauerstoff, dadurch gekennzeichnet, daß die Anode aus einem Edelmetall oder einer Edelmetall-Legierung, beispielsweise durch Sputterätzen, tiefengereinigt wird und daß anschließend eine dünne, porenfreie Schicht eines Edelmetalls, einer Edelmetall-Legierung oder einer Legierung mit Edelmetalleigenschaften durch chemische oder physikalische Dampfabscheidung (CVD, PVD), durch plasmaaktivierte chemische Dampfabscheidung (PACVD), durch Ionen-Platieren (IP), durch Kathoden- oder Magnetron-Kathoden-Zerstäubung aufgebracht wird.

**10.** Verfahren nach Anspruch 8 oder 9, dadurch gekennzeichnet, daß die dünne Schicht durch Kathoden- oder Magnetron-Kathoden-Zerstäubung (Sputtern) in Anwesenheit eines Inertgases, vorzugsweise Argon, mit einem Partialdruck $\geq 1 . 10^{-6}$ mbar hergestellt wird.

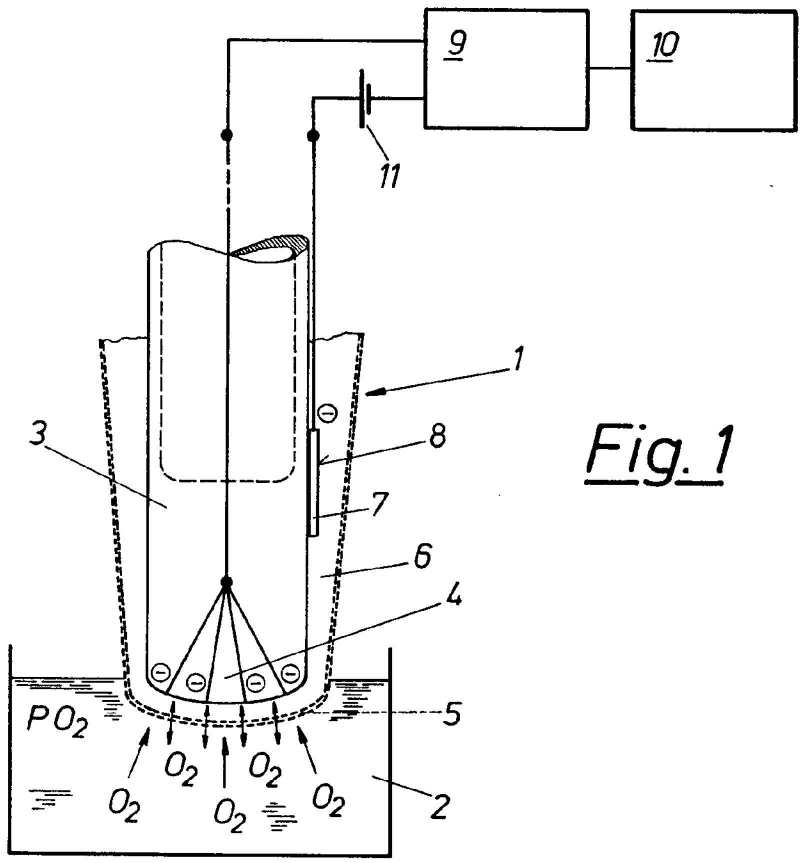


Fig. 1

Fig. 2

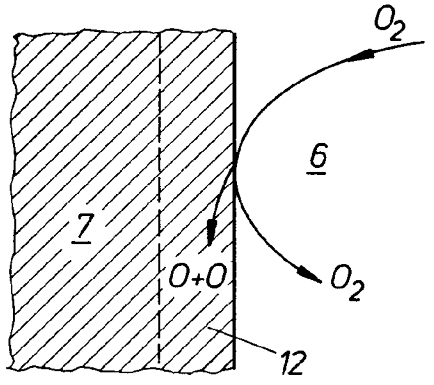


Fig. 3